(19) Europäisches Patentamt
European Patent Office
Office européen des brevets

(11) **EP 1 199 250 B1**

(12) **FASCICULE DE BREVET EUROPEEN**

(45) Date de publication et mention de la délivrance du brevet:
**29.12.2004   Bulletin 2004/53**

(51) Int Cl.⁷: **B64G 1/24**, B64G 1/50, B64G 1/66, G05D 1/08

(21) Numéro de dépôt: **01402415.2**

(22) Date de dépôt: **20.09.2001**

(54) **Perfectionnements apportés aux satéllites géostationnaires**

Verbesserungen an geostationären Satelliten

Improvements applied to geostationary satellites

(84) Etats contractants désignés:
**AT BE CH CY DE DK ES FI FR GB GR IE IT LI LU MC NL PT SE TR**

(30) Priorité:  **16.10.2000  FR 0013211**

(43) Date de publication de la demande:
**24.04.2002   Bulletin 2002/17**

(73) Titulaire: **ALCATEL**
**75008 Paris (FR)**

(72) Inventeur: **Youssefi, Thierry**
**31600 Labastidette (FR)**

(74) Mandataire: **Smith, Bradford Lee et al**
**COMPAGNIE FINANCIERE ALCATEL**
**Département Propriété Industrielle**
**54, rue La Boétie**
**75008 Paris (FR)**

(56) Documents cités:
**EP-A- 0 260 442          FR-A- 2 697 375**
**FR-A- 2 729 116          US-A- 3 422 636**
**US-A- 4 375 878          US-A- 4 690 354**

- **RENNER U, NAUCK J: "A Sun-Pointing Communications Satellite" ESA BULLETIN, XP001011486**
- **PATENT ABSTRACTS OF JAPAN vol. 015, no. 029 (E-1026), 23 janvier 1991 (1991-01-23) -& JP 02 272803 A (NEC CORP), 7 novembre 1990 (1990-11-07)**
- **PATENT ABSTRACTS OF JAPAN vol. 018, no. 424 (M-1652), 9 août 1994 (1994-08-09) -& JP 06 127490 A (NEC CORP), 10 mai 1994 (1994-05-10)**

**Description**

L'invention est relative à un satellite géostationnaire comportant des antennes tournées vers la terre pour communiquer avec des équipements terrestres.

Un satellite géostationnaire, c'est-à-dire de position fixe par rapport à la terre, est à une distance de 36 000 km du globe et, de ce fait, peut couvrir une vaste région de ce dernier. C'est pourquoi, les satellites géostationnaires sont souvent utilisés pour relayer des communications de tous genres : téléphonie, télévision, etc.

L'augmentation en besoin de communications entraîne le besoin d'augmenter la puissance des équipements à l'intérieur de satellites géostationnaires.

Ces équipements comprennent, tout d'abord, ceux qui sont nécessaires à la mission du satellite, à savoir, en général, les équipements de télécommunication : multiplexeurs, amplificateurs de puissance, etc. et les antennes d'émission et de réception dirigées vers la terre. Les équipements comportent aussi des moyens de maintien et/ou de contrôle de l'attitude du satellite dans la position nécessaire et des radiateurs pour évacuer la chaleur produite par certains équipements ou reçue du soleil. L'énergie électrique de ces équipements est fournie, d'une part, par des générateurs d'énergie solaire constitués de panneaux solaires et, d'autre part, par des accumulateurs d'énergie électrique assurant la continuité de la mission du satellite quand ce dernier se trouve dans une zone d'éclipse.

Habituellement, pour augmenter la puissance des équipements d'un satellite, on augmente la taille ou le nombre des panneaux solaires et donc, corrélativement, la taille des radiateurs destinés à évacuer la chaleur, soit, dans l'ensemble, la taille et la masse du satellite. Mais l'augmentation de taille et de masse entraîne des problèmes de tenue mécanique du satellite ainsi que des problèmes de coût, car le nombre de satellites à installer avec un même lanceur diminue.

Pour augmenter la puissance totale rayonnée par les radiateurs de dissipation de chaleur sans augmenter la surface extérieure totale du satellite, et donc son encombrement et son poids, on a proposé un satellite comportant des radiateurs déployables, c'est-à-dire ne couvrant pas la surface extérieure du satellite mais reliés à ce dernier par une boucle fluide assurant une bonne conductivité thermique. Mais ces radiateurs déployables, pour ne pas occulter de façon significative le champ de vision des antennes, présentent un angle de l'ordre de 20 ° par rapport aux murs ou parois nord et sud dont ils constituent une extension, ce qui diminue leur efficacité en raison du contact direct de ces parois avec le rayonnement solaire.

Quel que soit le mode de réalisation du satellite, on recouvre ses parois nord et sud, celles qui sont le moins exposées au rayonnement solaire, de radiateurs constitués de miroirs de quartz (dénommés "OSR") qui évacuent la chaleur par rayonnement infrarouge et on dispose les équipements électroniques dissipateurs de chaleur sous ces parois. Mais ces miroirs de quartz se dégradent progressivement en raison des contraintes thermiques qu'ils subissent constamment, ce qui réduit leur efficacité et par voie de conséquence la durée de vie du satellite.

L'invention fournit un satellite géostationnaire qui, pour une même masse, permet une puissance des équipements significativement supérieure à celle des équipements des satellites géostationnaires connus.

A cet effet, le satellite géostationnaire conforme à l'invention présente un corps dont les parois nord et sud sont constamment orientées parallèlement au rayonnement solaire et comporte des moyens pour que les moyens d'antennes soient toujours pointés vers la zone terrestre à couvrir.

Du fait de l'orientation des parois nord et sud du corps du satellite, l'effet du rayonnement solaire est minimisé. Ainsi, dans une réalisation, les parois nord et sud sont dépourvues de miroirs de quartz OSR mais, à la place, on peut prévoir un simple revêtement réfléchissant tel qu'une peinture blanche. Ainsi, le coût du satellite est réduit ainsi que sa durée de fabrication et sa masse.

Dans un mode de réalisation, les moyens d'antennes sont solidaires d'une paroi qui est mobile par rapport au corps du satellite de façon à permettre que ces moyens d'antennes soient constamment pointés vers leur zone à couvrir.

Par ailleurs, l'orientation constante du corps du satellite par rapport au rayonnement solaire permet, comme c'est le cas dans le mode de réalisation préféré de l'invention, d'orienter les panneaux solaires de façon telle qu'ils soient en permanence perpendiculaires au rayonnement.

Dans ce cas, on peut montrer que la puissance du générateur solaire est, pour une même surface de panneaux, supérieure de 9% à la puissance d'un satellite classique et cela sans augmentation de la masse et de l'encombrement du satellite.

En outre, le calcul montre que, grâce à l'orientation du corps du satellite avec les parois nord et sud dans la direction du rayonnement solaire, la puissance dissipable est supérieure de 53% à celle que l'on pourrait obtenir sans cette disposition, ce qui se traduit par une augmentation de 53% de la capacité du satellite.

Le panneau orientable comportant les moyens d'antennes peut être fabriqué séparément du reste du satellite. On peut donc procéder à la fabrication simultanée du panneau avec les moyens d'antennes et du reste du satellite et les assembler ensuite. Dans ces conditions, le temps de fabrication de l'ensemble du satellite peut être réduit.

Ainsi, l'invention concerne aussi un procédé de fabrication de satellite géostationnaire qui est caractérisé en ce que, le satellite présentant un corps dont les parois nord et sud sont orientables dans la direction du rayonnement solaire et un support de moyens d'antennes orientables par rapport au corps de façon que les antennes soient toujours pointées vers la zone terrestre avec laquelle elles doivent communiquer, on monte séparément le support et les moyens d'antennes du reste du satellite et on assemble ensuite le support et le corps du satellite.

Dans un mode de réalisation, les réflecteurs d'antennes sont fixés près des sources, la liaison entre les sources et les réflecteurs étant réalisée par des bras, de préférence en carbone pour obtenir une bonne stabilité thermo-élastique. La liaison directe des réflecteurs près des sources par des bras en carbone à coefficient de dilatation quasi-nul permet de s'affranchir des déformations thermoélastiques de la caisse du satellite comme c'est le cas dans les réalisations classiques

Dans un mode de réalisation, les antennes sont de type à balayage électronique, ce qui par rapport au premier mode de réalisation, évite la nécessité de prévoir un panneau orientable par rapport au reste du corps du satellite.

Le corps du satellite ayant toujours la même attitude par rapport au rayonnement solaire, les équipements, en particulier les équipements électroniques se trouvant sous les parois nord et sud, subissent de faibles variations de température. En conséquence, la fiabilité augmente et, en outre, les exigences de qualification des composants diminuent, les analyses et essais thermiques étant en particulier simplifiés.

Dans un mode de réalisation, on tire profit des moyens d'orientation des antennes pour corriger les défauts de pointage ou modifier la zone terrestre à couvrir.

Dans une réalisation, le multiplexeur de sortie est disposé sur la face externe des radiateurs nord/sud, ce qui permet un gain de place sur la surface implantable interne et une augmentation de la capacité de la plate-forme En effet les multiplexeurs de sortie étant très chauds ( de 100 à 180 °C) le fait d'avoir supprimé l'inclinaison de 23° des radiateurs nord/sud permet avec une protection (bafflage) appropriée de les exposer directement à l'espace et d'avoir accès à un contrôle thermique radiatif du corps du multiplexeur à 180°C échangeant directement avec l'espace à 4°K.

Dans le cas où les moyens d'antennes sont sur un support orientable par rapport au reste du corps du satellite, il faut prévoir une liaison par guide souple entre ce support et l'électronique de commande se trouvant dans le corps. Mais de telles liaisons sont déjà connues, par exemple celles qui sont prévues dans l'antenne SPOT Mobile réalisée par la Société Alcatel dans le cadre du satellite SESAT. Cette antenne motorisée selon deux axes avec +/-20° de débattement a permis de qualifier des guides d'ondes souples dans des condition similaires au besoin de la présente invention.

En bref, l'invention concerne un satellite géostationnaire comportant des moyens d'antennes pour établir des communications avec une zone de la surface terrestre qui comprend des moyens de contrôle d'attitude pour que ses parois nord et sud soient constamment parallèles au rayonnement solaire et des moyens de réglage pour que les moyens d'antennes soient toujours pointés vers la zone terrestre à couvrir.

Dans une réalisation, le satellite comporte des panneaux solaires dont la surface est solidaire du corps du satellite, ces panneaux étant perpendiculaires au rayonnement solaire. Selon un mode de réalisation, on prévoit un support pour tous les moyens d'antennes qui est orientable par rapport au corps du satellite présentant les parois nord et sud.

Dans ce cas, les moyens électroniques de télécommunication sont par exemple solidaires du support pour les moyens d'antenne et/ou les moyens de contrôle d'attitude et les moyens de réglage du support sont solidaires du corps du satellite.

Selon un autre mode de réalisation, les moyens de réglage pour maintenir les moyens d'antennes constamment pointés vers la zone à couvrir comportent des moyens à balayage électronique.

Les moyens de réglage permettant de maintenir les moyens d'antennes constamment dirigés vers la zone terrestre à couvrir peuvent également être utilisés pour effectuer des corrections de pointage et/ou pour modifier la position de la zone à couvrir.

Les parois nord et/ou sud sont avantageusement recouvertes de peinture blanche.

Dans une réalisation, les multiplexeurs de sortie sont disposés sur la face externe et, de préférence, sont associés à un contrôle thermique radiatif par exposition directe à l'espace.

Les moyens d'antennes comprennent par exemple des réflecteurs reliés au support par l'intermédiaire de bras en carbone.

Les bras en carbone ont par exemple une forme générale de H.

L'invention concerne aussi un procédé de montage d'un satellite géostationnaire dans lequel on monte séparément le support avec les moyens d'antennes et le corps du satellite.

D'autres caractéristiques et avantages de l'invention apparaîtront avec la description de certains de ses modes de réalisation, celle-ci étant effectuée en se référant aux dessins ci-annexés sur lesquels :

La figure 1 est un schéma montrant un premier mode de réalisation de l'invention,
la figure 2 est un schéma analogue à celui de la figure 1 pour une variante,
la figure 3 est un schéma correspondant à celui de la figure 1 montrant diverses positions du satellite selon l'invention,

la figure 4 représente, de façon plus détaillée, le satellite représenté sur la figure 1, ce satellite étant représenté en position stockée, avant lancement,

la figure 5 est une vue analogue à celle de la figure 4, mais pour la position déployée du satellite,

la figure 6 est une vue de côté de la figure 5,

la figure 7 est un diagramme montrant certaines propriétés de satellites conventionnels et d'un satellite conforme à l'invention,

la figure 8 est un schéma montrant, en position repliée, un satellite selon une variante de réalisation correspondant à la figure 1, et

la figure 9 est une vue de côté de la figure 8.

Le satellite géostationnaire et son procédé de fabrication que l'on va maintenant décrire en relation avec les figures peuvent être utilisés pour une puissance d'émission et de réception comprise entre 10 et 20 KW.

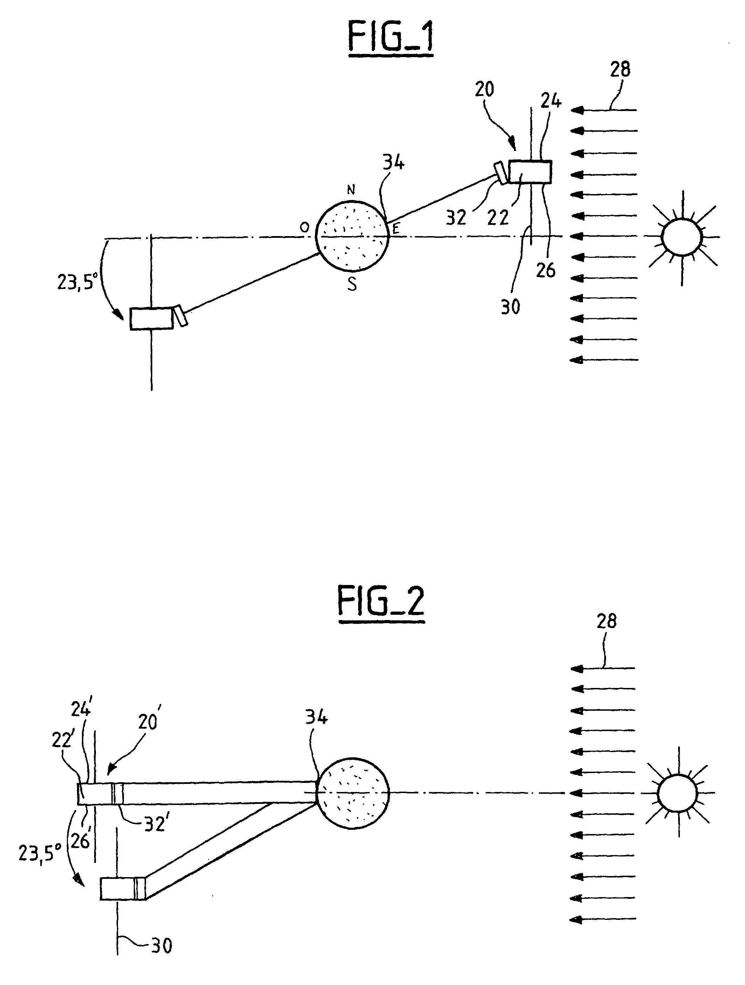

Selon un premier mode de réalisation représenté sur la figure 1, le satellite géostationnaire 20 comporte un corps 22 dont les faces nord 24 et sud 26 sont toujours parallèles au flux solaire 28 et les panneaux solaires 30 utilisés pour produire l'énergie électrique sont toujours dirigés perpendiculairement au flux 28.

Au corps 22 est articulé un support 32 pour les antennes (non montrées en détail sur le schéma de la figure 1) et des moyens de commande sont prévus pour que les antennes soient toujours dirigées vers la zone terrestre 34 à couvrir.

Dans la variante représentée, également de façon schématique, sur la figure 2, le satellite 20' comporte aussi un corps 22' dont les parois nord 24' et sud 26' sont toujours parallèles au flux solaire 28. Par contre, le support 32' d'antennes n'est pas mobile par rapport au corps 22' car les antennes sont du type à balayage électronique permettant un pointage vers la zone 34 à couvrir sans déplacement mécanique.

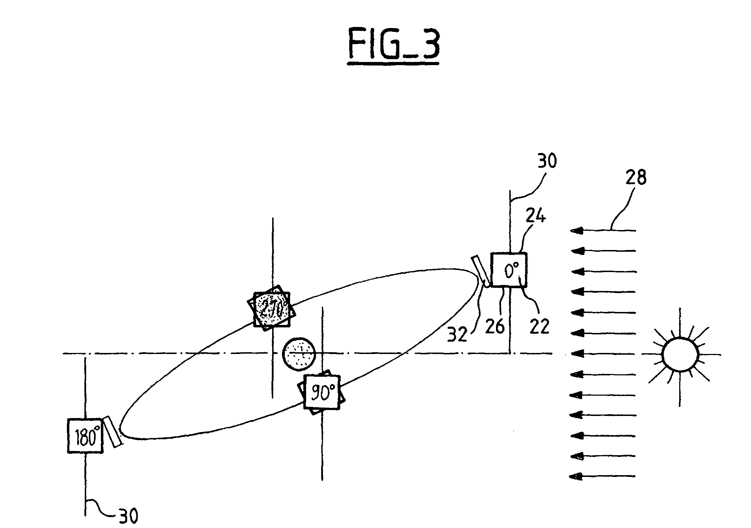

La figure 3 est un schéma montrant les diverses attitudes du satellite 20 représenté sur la figure 1 au cours d'un cycle de 24 heures. En effet, pour que les faces nord et sud 24 et 26 soient constamment parallèles au flux solaire 28 et pour que les panneaux solaires 30 soient toujours dirigés vers le flux 28, il est nécessaire que le satellite dispose de moyens de contrôle d'attitude, en plus des moyens de commande de l'orientation du support 32.

On voit ainsi que dans la position notée 0° du satellite, la face réceptrice des panneaux solaires 30 est à l'opposé du support 32 tandis que dans la position 180°, la face réceptrice des panneaux solaires 30 doit au contraire se trouver du même côté que le support 32 d'antennes.

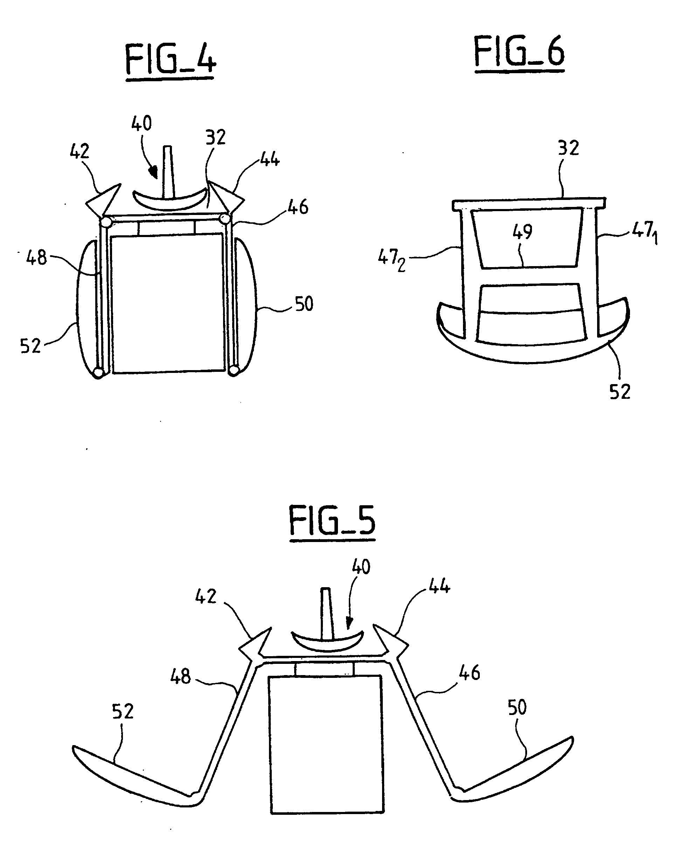

La figure 4 est un schéma de satellite 20 correspondant au mode de réalisation de la figure 1 dans une configuration stockée, par exemple lors du lancement, tandis que la figure 5 montre le satellite après lancement.

Sur le support 32, sont montées, d'une part, une antenne de réception 40 et, d'autre part, les sources 42 et 44 de l'antenne d'émission. En outre, à ce support 32, sont articulés des bras 46 et 48, par exemple en carbone, à l'autre extrémité desquels sont articulés des réflecteurs de l'antenne d'émission respectivement 50 et 52.

Sur ces schémas, les panneaux solaires n'ont pas été montrés.

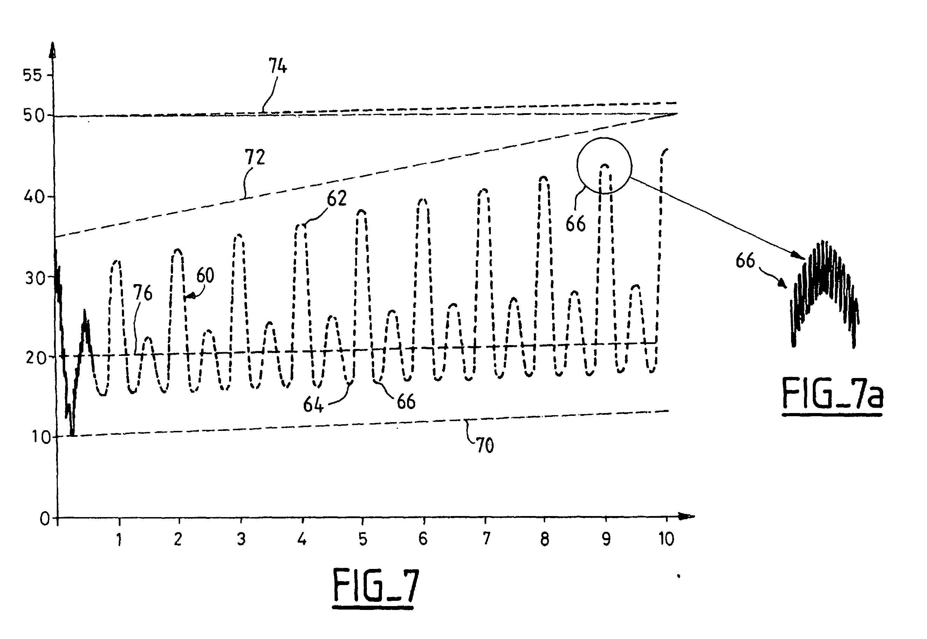

La figure 6 est une vue de côté de la figure 4.

Le bras 46 présente la forme d'un H avec deux branches $47_1$ et $47_2$ reliant le support 32 à l'antenne d'émission 50 ou 52 et une branche centrale 49 reliant entre elles les branches $47_1$ et $47_2$ en leurs milieux. Un tel bras est à la fois d'une grande rigidité et d'un poids réduit.

Pour comparer le satellite conforme à l'invention avec un satellite qui garde une attitude constante par rapport à la terre, on compare les puissances sur les radiateurs. Cette puissance satisfait à la formule suivante :

$$Sin(23,5°).C_s.\alpha.S_r + P_r = \sigma\varepsilon.S_r.(T_r^4 - 4^{o4})$$

Dans cette formule, $C_s$ est la constante solaire, $\alpha$ (alpha) l'absorptivité du revêtement du radiateur sur les parois nord et sud, $S_r$ est la surface du radiateur, c'est-à-dire la surface de la paroi nord ou sud, $P_r$ la puissance dissipée par le radiateur, $\sigma$ (sigma) est la constante de Boltzman, $\varepsilon$ (epsilon) est l'émissivité du revêtement du radiateur et $T_r$ est la température du radiateur.

Cette formule permet ainsi d'établir le tableau ci-dessous dans lequel on a indiqué les situations au solstice d'été et au solstice d'hiver et, dans chaque cas, le début de vie du satellite et la fin de vie du satellite. En effet, quand le satellite est équipé de radiateurs en quartz (notés OSR sur le tableau), le paramètre $\alpha$ diminue avec l'âge du satellite.

| | | | $C_S$ solstice été en W | | $C_S$ solstice hiver en W | | | |
|---|---|---|---|---|---|---|---|---|
| | | | 1320 | 1320 | 1420 | 1420 | | |

(suite)

| | | | C$_S$ solstice été en W | | | C$_S$ solstice hiver en W | | | |
|---|---|---|---|---|---|---|---|---|---|
| | | | début de vie | fin de vie | | début de vie | fin de vie | | |
| | | | | | | | | | |
| | | alpha OSR | 0,1 | 0,25 | | 0,1 | 0,25 | | |
| | | epsilon OSR | 0,83 | 0,83 | | 0,83 | 0,83 | | |
| | | | | | | | | | |
| | | Epsilon peinture blanche | 0,9 | 0,9 | | 0,9 | 0,9 | | |
| | | | | | | | | | |
| | | sigma | 5,67E-08 | 5,67E-08 | | 5,67E-08 | 5,67E-08 | | |
| | | | | | | | | | |
| | | température puits | 4 | 4 | °k | 4 | 4 | °k | |
| | | | | | | | | | |
| | | température panneau | 318,5 | 318,5 | °k | 318,5 | 318,5 | °k | 45 |
| | | | | | | | | | |
| | | angle solstice | 23,5 | 23,5 | | 23,5 | 23,5 | | |
| | | sinus angle | 0,398749069 | 0,398749069 | | 0,398749069 | 0,398749069 | | |
| | | | | | | | | | |
| | puissance dissipable osr/m$^2$ à 23,5° | | 431,65 | 352,70 | | 427,66 | 342,73 | | |
| | | | | | | | | | |
| | puissance dissipable peinture/m$^2$ à 0° | | 525,13 | 525,13 | | 525,13 | 525,13 | | |
| | | | | | | | | | |
| | | | | | | | | | |
| | gain de puissance en % | | **21,66** | **48,89** | | **22,79** | **53,22** | | |

Dans ce tableau "température puits" signifie la température de l'espace.

On voit ainsi que le gain de puissance peut atteindre plus de 53%.

La figure 7 est un diagramme comparant les variations de températures de la paroi sud pour plusieurs années avec le satellite conforme à l'invention et un satellite classique. Sur ce diagramme, le temps (en années) est porté en abscisse et la température (en degrés C) est portée en ordonnée. La courbe 60 représente les variations de la température pour un satellite classique. Pour un tel satellite, la température de la paroi sud subit des variations avec les saisons. Ainsi, chaque année, la température présente un maximum 62 au solstice d'hiver et des minima 64 et 66 aux équinoxes. En outre, on note que les maxima augmentent d'année en année en raison du vieillissement des équipements et des OSR.

L'agrandissement de la zone 66 de la courbe 60 qui est représenté sur la figure 7a, montre qu'aux variations dues aux saisons se superposent des variations journalières.

Ainsi, pour réaliser un satellite classique, il faut faire appel à des équipements qui supportent des températures minimales et maximales correspondant respectivement aux courbes basse 70 et haute 72 du diagramme de la figure 7.

Sur ce diagramme, la droite 74 représente la température de la paroi sud pour un premier mode de réalisation de l'invention et la droite 76 pour un second mode de réalisation de l'invention. Étant donné que les variations de températures sont négligeables, les contraintes sur les équipements sont beaucoup moins sévères. Ainsi, les composants électroniques, en particulier, peuvent être réalisés à meilleur marché et, à prix analogue, sont plus fiables.

Dans le cas où l'on choisit une température moyenne de l'ordre de 50° C pour la paroi sud (droite 74), la capacité en puissance est maximale. Dans le cas où l'on choisit une température moyenne de l'ordre de 20° C (droite 76), les équipements à bord du satellite peuvent être de réalisation plus conventionnelle et donc meilleur marché. Cette température de dimensionnement peut être aussi utilisée pour des électroniques nécessitant un contrôle thermique plus froid ( réduction de facteur de bruit par exemple).

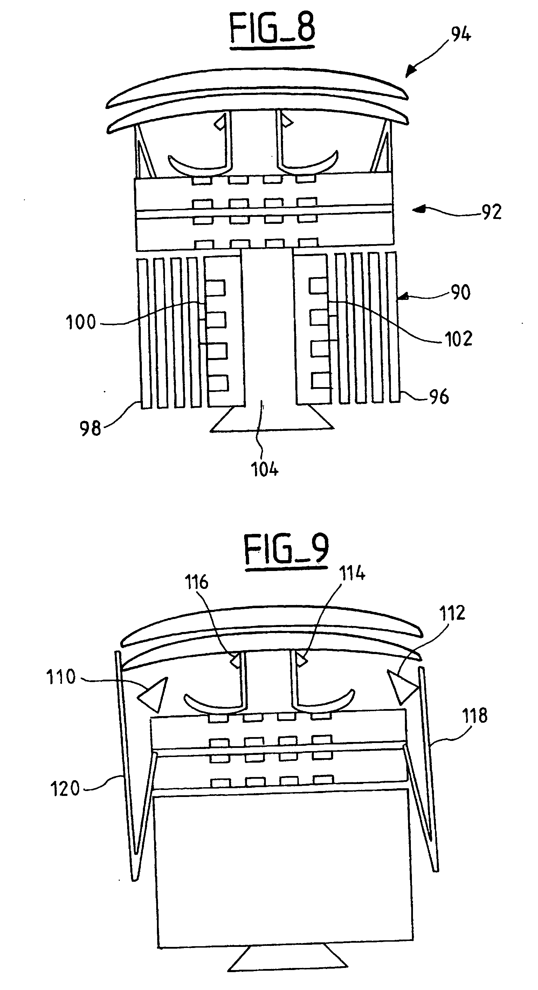

Dans le mode de réalisation de l'invention qui est représenté sur les figures 8 et 9, le satellite présente deux parties, à savoir un bloc de plate-forme 90 qui comporte seulement les moyens de commande, notamment l'électronique nécessaire au fonctionnement du satellite, et un bloc 92 comprenant la charge utile, c'est-à-dire l'électronique d'émission et de réception. Ainsi dans ce mode de réalisation, le satellite présente une structure modulaire dans laquelle on a séparé les fonctions du satellite lui-même de celles de l'électronique de télécommunication. Dans ces conditions, les satellites de ce type peuvent être réalisés à un coût réduit car la plate-forme 90 peut être identique pour une série de satellites, seul le bloc 92 de télécommunication changeant d'un satellite à un autre.

En outre, dans cette réalisation, le bloc 92 est fixé sur le support des antennes 94. Dans ces conditions, il n'est pas nécessaire de prévoir, comme dans la première réalisation décrite ci-dessus, de liaison souple entre l'électronique de commande de télécommunication et les antennes.

Le bloc de plate-forme 90 comprend, outre les équipements électroniques de commande du satellite lui-même, les générateurs solaires 96 et 98 présentés repliés sur la figure 8, solidaires des parois sud 100 et nord 102. Un tube central 104 a pour fonction de transmettre les charges dynamiques liées au lancement.

Les équipements de charge utile n'étant plus directement fixés sur les parois nord et sud on peut prévoir un dispositif du type multiétagères afin d'augmenter la densité d'intégration. L'échange thermique entre les équipements dissipatifs sur étagères dans le bloc 92 et les radiateurs nord/sud 100 et 102 est réalisé par boucle fluide.

L'ensemble d'antennes comporte des sources d'émission 110, 112 (figure 9), des sources de réception 114, 116 et des bras 118, 120 pour les réflecteurs d'antennes, ces bras étant représentés en position repliée sur la figure 9.

## Revendications

1. Satellite géostationnaire comportant des moyens d'antennes pour établir des communications avec une zone de la surface terrestre, **caractérisé en ce qu'**il comprend des moyens de contrôle d'attitude pour que ses parois nord (24)et sud (26) soient constamment parallèles au rayonnement solaire (28') et des moyens de réglage pour que les moyens d'antennes soient toujours pointés vers la zone terrestre à couvrir.

2. Satellite selon la revendication 1, **caractérisé en ce qu'**il comporte des panneaux solaires (30) dont la surface est solidaire du corps du satellite, ces panneaux étant perpendiculaires au rayonnement solaire.

3. Satellite selon la revendication 1 ou 2, **caractérisé en ce qu'**il comprend un support (32) pour tous les moyens d'antennes qui est orientable par rapport au corps (22) du satellite présentant les parois nord et sud.

4. Satellite selon la revendication 3, **caractérisé en ce que** les moyens (92) électroniques de télécommunication sont solidaires du support pour les moyens d'antenne.

5. Satellite selon la revendication 4, **caractérisé en ce que** les moyens de contrôle d'attitude et les moyens de réglage du support sont solidaires du corps du satellite.

6. Satellite selon la revendication 1 ou 2, **caractérisé en ce que** les moyens de réglage pour maintenir les moyens d'antennes constamment pointés vers la zone à couvrir comportent des moyens à balayage électronique (32').

7. Satellite selon l'une quelconque des revendications précédentes, **caractérisé en ce que** les moyens de réglage permettant de maintenir les moyens d'antennes constamment dirigés vers la zone terrestre à couvrir sont également utilisés pour effectuer des corrections de pointage et/ou pour modifier la position de la zone à couvrir.

8. Satellite selon l'une quelconque des revendications précédentes, **caractérisé en ce que** les parois nord et/ou sud sont recouvertes de peinture blanche.

9. Satellite selon l'une quelconque des revendications précédentes, **caractérisé en ce que** les multiplexeurs de sortie sont disposés sur la face externe, et, de préférence, sont associés à un contrôle thermique radiatif par exposition directe à l'espace.

10. Satellite selon la revendication 3, **caractérisé en ce que** les moyens d'antennes comprennent des réflecteurs (50,52) reliés au support (32) par l'intermédiaire de bras (46, 48) en carbone.

11. Satellite selon la revendication 10, **caractérisé en ce que** les bras (46, 48) en carbone ont une forme générale de H.

12. Procédé de montage d'un satellite géostationnaire selon la revendication 3, 4 ou 5, **caractérisé en ce qu'**on monte séparément le support avec les moyens d'antennes et le corps du satellite.

**Patentansprüche**

1. Geostationärer Satellit, ausgestattet mit Antennenvorrichtungen zum Aufbauen von Verbindungen mit einem Gebiet der Erdoberfläche, **dadurch gekennzeichnet, dass** er Vorrichtungen zur Lageregelung aufweist, damit seine Wände auf der Nordseite (24) und auf der Südseite (26) ständig parallel zur Sonnenstrahlung (28') stehen, sowie Einstellvorrichtungen, damit die Antennenvorrichtungen immer zu dem abzudeckenden Gebiet auf der Erde zeigen.

2. Satellit nach Anspruch 1, **dadurch gekennzeichnet, dass** er Solarpanels (30) aufweist, deren Oberfläche fest mit dem Körper des Satelliten verbunden ist, wobei diese Panels senkrecht zur Sonnenstrahlung stehen.

3. Satellit nach Anspruch 1 oder 2, **dadurch gekennzeichnet, dass** er über einen Träger (32) für alle Antennenvorrichtungen verfügt, welcher im Verhältnis zum Körper des Satelliten, der die in Nord- und in Südrichtung zeigenden Wände aufweist, ausgerichtet werden kann.

4. Satellit nach Anspruch 3, **dadurch gekennzeichnet, dass** die elektronischen Telekommunikationsmittel (92) fest mit dem Träger für die Antennenvorrichtungen verbunden sind.

5. Satellit nach Anspruch 4, **dadurch gekennzeichnet, dass** die Lageregelungsvorrichtungen und die Einstellvorrichtungen des Trägers fest mit dem Körper des Satelliten verbunden sind.

6. Satellit nach Anspruch 1 oder 2, **dadurch gekennzeichnet, dass** die Einstellvorrichtungen, die dazu dienen, dass die Antennenvorrichtungen ständig zu dem abzudeckenden Gebiet zeigen, Vorrichtungen mit elektronischer Abtastung (32') sind.

7. Satellit nach einem beliebigen der vorhergehenden Ansprüche, **dadurch gekennzeichnet, dass** die Einstellvorrichtungen, mit deren Hilfe die Antennenvorrichtungen ständig zu dem abzudeckenden Gebiet auf der Erde zeigend gehalten werden, auch dazu genutzt werden, um Ausrichtungskorrekturen durchzuführen und/oder um die Position des abzudeckenden Gebiets zu verändern.

8. Satellit nach einem beliebigen der vorhergehenden Ansprüche, **dadurch gekennzeichnet, dass** die Wände auf der Nord- und/oder der Südseite mit einem weißen Anstrich überzogen sind.

9. Satellit nach einem beliebigen der vorhergehenden Ansprüche, **dadurch gekennzeichnet, dass** die Ausgangs-Multiplexer an der Außenseite angeordnet sind und vorzugsweise mit einer auf Abstrahlung durch direkte Exposition gegenüber dem Weltraum basierenden Wärmeregelung verbunden sind.

10. Satellit nach Anspruch 3, **dadurch gekennzeichnet, dass** die Antennenvorrichtungen Reflektoren (50, 52) enthalten, die mit dem Träger (32) über Arme (46, 48) aus Karbonfasern verbunden sind.

11. Satellit nach Anspruch 10, **dadurch gekennzeichnet, dass** die Arme (46, 48) aus Karbonfasern insgesamt die Form eines "H" haben.

12. Montageverfahren für einen geostationären Satelliten nach Anspruch 3, 4 oder 5, **dadurch gekennzeichnet, dass** der Träger mit den Antennenvorrichtungen und der Körper des Satelliten getrennt montiert werden.

**Claims**

1. A geosynchronous satellite including antenna means for communicating with an area of the terrestrial surface, **characterized in that** it includes attitude control means whereby North (24) and South (26) walls of said satellite are at all times parallel to the solar radiation (28'), and adjustment means so that the antenna means are always pointed toward the terrestrial coverage area.

2. A satellite according to claim 1, **characterized in that** it includes solar panels (30) perpendicular to the solar radiation whose surface is fastened to the body of the satellite.

3. A satellite according to claim 1 or 2, **characterized in that** it includes a support (32) for all the antenna means that can be oriented relative to the body (22) of the satellite including the North and South walls.

4. A satellite according to claim 3, **characterized in that** the telecommunication electronics means (92) are fastened to the support for the antenna means.

5. A satellite according to claim 4, **characterized in that** the attitude control means and the support adjustment means are fastened to the body of the satellite.

6. A satellite according to claim 1 or 2, **characterized in that** the adjustment means for maintaining the antenna means pointed at all times toward the coverage area include electronic scanning means (32').

7. A satellite according to any of the preceding claims, **characterized in that** the adjustment means for maintaining the antenna means directed at all times toward the terrestrial coverage area are also used for pointing corrections and/or to modify the position of the coverage area.

8. A satellite according to any of the preceding claims, **characterized in that** the North and/or South walls are covered with white paint.

9. A satellite according to any of the preceding claims, **characterized in that** the output multiplexers are disposed on the outside face and preferably associated with radiant thermal control by direct exposure to space.

10. A satellite according to claim 3, **characterized in that** the antenna means include reflectors (50, 52) connected to the support (32) by carbon arms (46, 48).

11. A satellite according to claim 10, **characterized in that** the carbon arms (46, 48) are generally H-shaped.

12. A method of assembling a geosynchronous satellite according to claim 3, 4 or 5, **characterized in that** the support with the antenna means is constructed separately from the body of the satellite.

## FIG_1

## FIG_2

# FIG_3

## FIG_4

## FIG_6

## FIG_5

FIG_7

FIG_7a

EP 1 199 250 B1

## FIG_8

## FIG_9